(19) Europäisches Patentamt
European Patent Office
Office européen des brevets

(11) **EP 4 316 987 B1**

## (12) FASCICULE DE BREVET EUROPEEN

(45) Date de publication et mention de la délivrance du brevet:
**23.04.2025 Bulletin 2025/17**

(21) Numéro de dépôt: **23179724.2**

(22) Date de dépôt: **16.06.2023**

(51) Classification Internationale des Brevets (IPC):
***B64D 11/06*** *(2006.01)*

(52) Classification Coopérative des Brevets (CPC):
**B64D 11/0643; B64D 11/06395; B64D 11/064;**
**B64D 11/0641; B64D 11/0644**

(54) **PROCEDE DE DETERMINATION DE LA POSITION D'UN DISPOSITIF D'ACTIONNEMENT, DISPOSITIF D'ACTIONNEMENT CORRESPONDANT**

VERFAHREN ZUR BESTIMMUNG DER POSITION EINER BETÄTIGUNGSVORRICHTUNG, BETÄTIGUNGSVORRICHTUNG

METHOD FOR DETERMINING THE POSITION OF AN ACTUATING DEVICE, CORRESPONDING ACTUATING DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **03.08.2022 FR 2208047**

(43) Date de publication de la demande:
**07.02.2024 Bulletin 2024/06**

(73) Titulaire: **Pga Electronic**
**36130 Montierchaume (FR)**

(72) Inventeur: **LAGONOTTE, Romeo**
**36130 Montierchaume (FR)**

(74) Mandataire: **Brevalex**
**Tour Trinity**
**1 B Place de la Défense**
**92400 Courbevoie (FR)**

(56) Documents cités:
**WO-A1-2013/148111      WO-A1-2014/009356**
**US-A1- 2015 375 865**

## Description

### Domaine de l'invention

La présente invention se rapporte au domaine des dispositifs d'actionnement d'éléments à actionner, par exemple des sièges.

Notamment, l'invention trouve son application pour l'actionnement des sièges dans le domaine aéronautique, et concerne plus particulièrement un procédé de détermination de la position d'un dispositif d'actionnement d'un ou plusieurs éléments de siège.

### Etat de la technique antérieure

Il est connu de vouloir mettre en œuvre des sièges pouvant présenter une pluralité de positions, par exemple dans les véhicules de transport tels que les avions, les bateaux et les trains, et notamment dans les classes les plus onéreuses.

Afin de pouvoir modifier la position de l'utilisateur installé sur son siège, il est connu d'équiper les sièges de dispositifs électriques d'actionnement permettant de faire varier les configurations du siège, par déplacement d'éléments de siège mobiles.

Le document WO 2013/148111 A1 concerne un système de codeur magnétique destiné à fournir une rétroaction de position à partir d'une surface réglable. Ce système comprend des premier et second engrenages de codeur entrecroisés ayant des nombres de dents différents, de sorte que les engrenages tournent selon des valeurs angulaires distinctes en fonction d'un rapport engrenage-dents. Les puces de codeur magnétique détectent la rotation des engrenages de codeur et déterminent une relation angulaire des engrenages pour déterminer la position de la surface réglable.

Le document US 2015/375865 A1 concerne un procédé de commande du mouvement des composants mobiles d'un siège motorisé. Ce procédé consiste, à l'aide d'un contrôleur, à surveiller un signal de rétroaction d'un actionneur pendant le mouvement d'un composant. Durant une phase d'accélération du mouvement de ce composant, un état de référence de la commande de mouvement, variable dans le temps, est détecté, et une valeur de référence du signal de rétroaction surveillé est déterminée en tant que valeur de référence. Une plage d'acceptation du signal de rétroaction est déterminée à l'aide de la valeur de référence du signal de rétroaction surveillé. Pendant une phase d'état stable du mouvement, le mouvement du composant est interrompu si le signal de rétroaction surveillé s'écarte de la plage d'acceptation du signal de rétroaction déterminée.

Le document WO 2014/009356 A1 concerne un procédé de calibrage d'un dispositif d'actionnement d'un ou plusieurs éléments à actionner d'une structure, le dispositif d'actionnement comportant un ou plusieurs actionneurs.

Les éléments de siège peuvent par exemple être un dossier inclinable articulé à une extrémité d'une assise, ou un repose-jambes articulé à l'autre extrémité de l'assise. La configuration de chaque élément de siège peut donc être modifiée par l'intermédiaire d'un dispositif d'actionnement apte à commander, de façon indépendante ou simultanée, le déplacement d'actionneurs placés au niveau des éléments de siège.

Par ailleurs, et de sorte à connaître à chaque instant la position des actionneurs, et donc la position des éléments de siège, il est connu de mettre en œuvre des capteurs de position qui permettent de recueillir des valeurs de mesure représentatives des positions physiques des actionneurs. Plus particulièrement, en fonctionnement, ces capteurs de position suivent la position de l'arbre de sortie de l'actionneur ce qui permet d'identifier la position des éléments du siège.

Les capteurs de position les plus fréquemment utilisés sont des potentiomètres qui possèdent par constitution des butées mécaniques.

Un inconvénient de telles butées mécaniques est qu'elles peuvent provoquer des contraintes d'utilisation afin de tenter d'éviter leur destruction par l'application de sur-couples. En effet, et de sorte à protéger les butées mécaniques, il s'avère nécessaire d'ajouter des éléments tel qu'un limiteur de couple par friction ce qui engendre un coût supplémentaire ce qui n'est pas satisfaisant.

Un autre inconvénient de ces butées mécaniques est que le système d'actionnement sera inopérant si la plage de fonctionnement de l'actionneur se trouve en dehors des butées mécaniques.

Avant l'utilisation du siège, il est nécessaire de calibrer les différents actionneurs de façon à ce que le dispositif d'actionnement soit apte à commander le déplacement de chaque actionneur dans sa plage de mouvement permise, entre une position de butée minimale et une position de butée maximale. De sorte à procéder à ce calibrage des actionneurs du dispositif d'actionnement, il est connu de mettre en œuvre un procédé de calage comprenant des étapes de pilotage du déplacement de l'actionneur dans un sens jusqu'à une première position puis dans l'autre sens jusqu'à une deuxième position avec, à chaque fois, une comparaison de la valeur de la grandeur caractéristique associée à l'actionneur dans l'une et l'autre des positions avec une valeur de référence prédéterminée de sorte à définir deux positions limites de références et ainsi effectuer le calibrage.

En outre, et de sorte à conserver ce calibrage une fois le procédé de calibrage effectué jusqu'au montage de l'actionneur sur le siège, il est connu d'implanter une barre anti-rotation n'autorisant que la translation et ainsi conserver le calibrage en rotation.

Un inconvénient de cette solution est que le procédé de calibrage s'avère relativement long à réaliser pour chacun des actionneurs, et peut être relativement complexe pour un opérateur à effectuer du fait de la précision nécessaire.

Par ailleurs, un autre inconvénient est que l'opérateur peut avoir des difficultés de montage de l'ensemble une fois calibré du fait de la nécessité de ne pas dérégler les différents actionneurs.

Il existe donc un besoin de mettre en œuvre un nouveau procédé de calibrage d'un dispositif d'actionnement pour un élément de siège d'aéronef.

## Exposé de l'invention

L'invention a pour but de remédier au moins en partie aux inconvénients mentionnés ci-dessus relatifs aux techniques de l'art antérieur.

Pour ce faire, l'invention concerne un procédé de détermination de la position d'un dispositif d'actionnement d'au moins un élément à actionner de siège d'aéronef, le dispositif d'actionnement comprenant une unité de calcul, un actionneur monté mobile en translation et/ou rotation sur un arbre de sortie de sorte à actionner l'au moins un élément de siège d'aéronef correspondant, ledit arbre de sortie étant relié à un codeur de position angulaire de sorte qu'une position X de l'actionneur sur ledit arbre de sortie correspond à une unique position angulaire θ du codeur de position angulaire, le procédé comprenant un sous procédé préalable de calibrage automatique dudit dispositif d'actionnement comprenant les étapes suivantes:

- une étape de placement de l'actionneur à une position prédéterminée Xref correspondant à une valeur d'angle attendue θatt du codeur ;
- une étape de mesure d'une valeur d'angle de positionnement initial θini du codeur de position angulaire lorsque l'arbre de l'actionneur est dans la position prédéterminée Xref ;
- une étape de comparaison de ladite valeur d'angle de positionnement initial θini et de ladite valeur d'angle attendue θatt ;
- une étape de calcul du décalage angulaire θdécal du signal du codeur de position angulaire, avec θdécal = (θini - θatt) [MODULO 360°], θdécal étant compris entre 0° et 359°.

Ainsi, l'invention propose une approche nouvelle et inventive permettant de résoudre au moins en partie certains des inconvénients de l'art antérieur.

Notamment, une telle solution permet de limiter les contraintes appliquées au système et ne nécessitent pas la mise en œuvre de pièces supplémentaires pour fonctionner.

En outre, un tel procédé de calibrage s'avère relativement simple mécaniquement et peu chronophage à réaliser pour chacun des actionneurs, et peut être relativement facile pour un opérateur à mettre en œuvre, et ce même si une haute précision est requise.

Par ailleurs, une telle solution s'avère relativement simple en termes de montage de l'ensemble tout en présentant une solution fiable.

Selon un aspect particulier d'au moins un mode de réalisation de l'invention, le procédé comprend une étape de mesure de la position X(t) de l'actionneur à un instant donné selon la relation suivante :

$$X(t) = \frac{\left[(\theta + \theta\text{décal})[\text{MODULO } 360°]\right]}{K} + Xmin$$

avec Xmin une position minimale de l'actionneur,
avec K un coefficient de proportion entre la valeur d'angle envoyée par le codeur et la valeur de la position de l'actionneur.

Selon un aspect particulier d'au moins un mode de réalisation de l'invention, le procédé comprend une étape de détermination d'une position d'au moins un élément à actionner de siège d'aéronef en fonction de ladite position de l'actionneur à un instant donné X(t).

Selon un aspect particulier d'au moins un mode de réalisation de l'invention, le procédé comprend une étape de détermination d'une position angulaire minimale θmin du codeur correspondant à une position minimale Xmin de l'actionneur, et d'une position angulaire maximale θmax du codeur correspondant à une position maximale Xmax de l'actionneur, la position angulaire maximale θmax et la position angulaire minimale θmin présentant un écart absolu inférieur à 360°.

Selon un aspect particulier d'au moins un mode de réalisation du procédé, si (θmin) > (θmax), le procédé comprend, pour 355°<θ< 365° :

- une étape de détection du sens de rotation dudit codeur angulaire 9 ;
- une étape de désactivation de ladite étape de mesure de la position (X(t)) de l'actionneur à un instant donné pendant une durée prédéterminée.

La durée prédéterminée peut consister en une période de temps supposée pendant laquelle le codeur va parcourir un certain nombre de degrés incluant le 359ème degré et le 360ème degrés correspondant au degré 0. Par exemple, cette durée prédéterminée peut être d'environ 15ms.

L'invention concerne également un dispositif d'actionnement d'au moins un élément à actionner de siège d'aéronef, le dispositif d'actionnement comprenant une unité de calcul, un actionneur muni d'un arbre de sortie de sorte à actionner l'au moins un élément de siège d'aéronef correspondant, ledit arbre de sortie étant relié à un codeur de position angulaire de sorte qu'une position X de l'actionneur sur ledit arbre de sortie correspond à une unique position angulaire θ du codeur, ledit dispositif étant configuré pour mettre en œuvre un procédé de détermination de la position du dispositif d'actionnement selon l'un des modes de réalisation précités.

Selon un aspect particulier d'au moins un mode de réalisation de l'invention, l'actionneur est mobile entre une position minimale Xmin correspondant à une unique position angulaire minimale θmin du codeur 9 et une position maximale Xmax correspondant à une unique position angulaire maximale θmax du codeur 9, l'écart entre la position angulaire maximale θmax et la position angulaire minimale θmin étant inférieur à 360 degrés.

Selon un aspect particulier d'au moins un mode de réalisation de l'invention, l'écart entre la position minimale Xmin de l'actionneur 3 et la position maximale Xmax de l'actionneur 3 est compris entre 100mm et 800mm, préférentiellement entre 500mm et 700mm, encore préférentiellement égal à 600mm.

Selon un aspect particulier d'au moins un mode de réalisation de l'invention, le codeur est un codeur magnétique présentant une réponse en rampes périodiques proportionnelle croissante ou décroissante, la position angulaire θ à un instant donné étant mesurée par mesure de l'axe magnétique d'un aimant à magnétisation radiale fixé sur l'actionneur.

Selon un aspect particulier d'au moins un mode de réalisation de l'invention, l'unité de calcul comprend un filtre à hystérésis.

L'invention concerne également un siège d'aéronef, comprenant au moins un élément de siège mobile, le siège étant muni d'au moins un dispositif d'actionnement selon l'un des modes de réalisation précités.

**Présentation des figures**

L'invention, ainsi que les différents avantages qu'elle présente, seront plus facilement compris à la lumière de la description qui va suivre d'un mode de réalisation illustratif et non limitatif de celle-ci, et des dessins annexés parmi lesquels :

[Fig. 1] est un schéma illustrant un siège d'aéronef selon un mode de réalisation de l'invention ;
[Fig. 2] est un schéma illustrant un dispositif d'actionnement d'au moins un élément à actionner de siège d'aéronef selon le mode de réalisation de la figure 1, et
[Fig. 3] est un schéma illustrant un procédé de détermination de la position d'un dispositif d'actionnement d'au moins un élément à actionner de siège d'aéronef selon un mode de réalisation de l'invention.

**Description détaillée d'un mode de réalisation de l'invention**

Le principe de l'invention repose sur la mise en œuvre d'un procédé de détermination de la position d'un dispositif d'actionnement 1 d'au moins un élément 2 à actionner de siège 10 d'aéronef, ce procédé comprenant un sous procédé 100' préalable de calibrage automatique du dispositif d'actionnement 1 de sorte à limiter les contraintes appliquées au système sans nécessiter la mise en œuvre de pièces supplémentaires pour fonctionner, tout en étant relativement simple mécaniquement et peu chronophage à réaliser pour chacun des actionneurs.

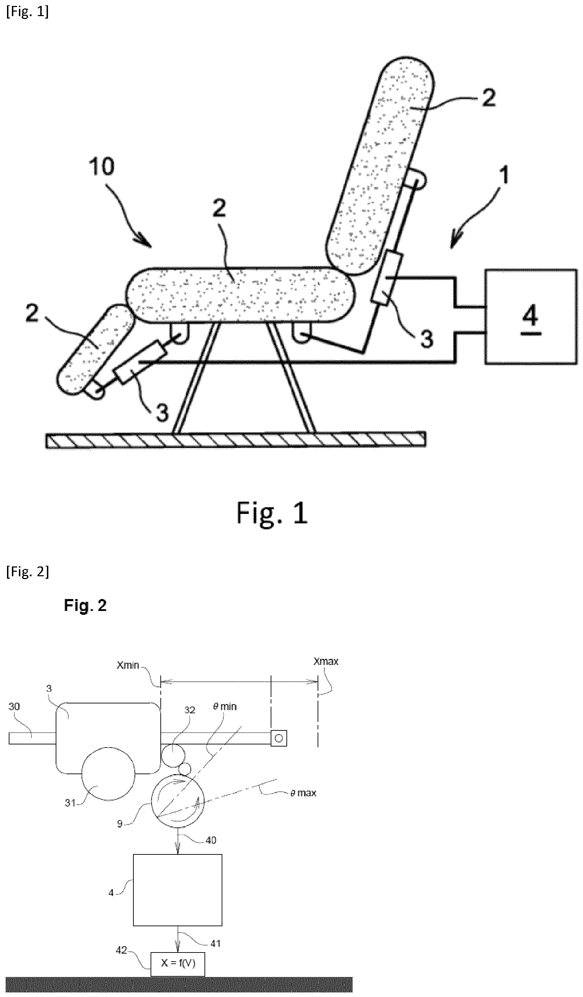

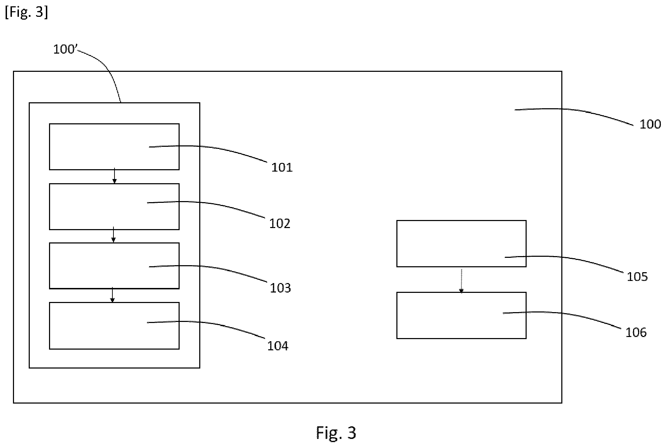

On présente maintenant, en relation avec les figures 1 à 3, un premier mode de réalisation d'un procédé de détermination de la position d'un dispositif d'actionnement d'au moins un élément à actionner de siège d'aéronef, d'un dispositif d'actionnement d'au moins un élément à actionner de siège d'aéronef, et d'un siège d'aéronef.

La figure 1 représente un siège d'aéronef comprenant trois éléments à actionner 2 sous la forme d'éléments de siège. Ici, ces éléments de siège 2 correspondent à un dossier inclinable, une assise, et un repose-jambes.

Ces éléments 2 de siège d'aéronef 10 sont susceptibles d'être mis en mouvement au moyen d'un dispositif d'actionnement 1 comportant des actionneurs 3. Ce mouvement des éléments 2 de siège d'aéronef 10 permettent de modifier la configuration d'utilisation du siège d'aéronef 10.

La configuration d'utilisation du siège d'aéronef 10 comprend, par exemple, une position TTL (acronyme de l'expression anglaise « taxiing, take-off and landing », c'est-à-dire « déplacement sur piste, décollage et atterrissage »), ou encore une position de couchage, encore appelée « position bed ». La configuration d'utilisation du siège d'aéronef 10 peut également comprendre en outre une position de référence, ou position par défaut.

Les actionneurs 3 peuvent par exemple être des actionneurs électriques. En variante, les actionneurs sont des actionneurs hydrauliques, des actionneurs pneumatiques, ou tout autre type d'actionneur connu.

Chacun des actionneurs 3 est monté mobile en translation et/ou en rotation sur un arbre de sortie 30 de sorte à actionner le ou les éléments 2 de siège 10 d'aéronef correspondant.

Comme illustré en figure 2, dans ce mode de réalisation, les actionneurs 3 sont mis en translation et/ou en rotation par le biais d'un ou plusieurs moteurs 31.

Cet arbre de sortie 30 est relié à un codeur 9 de position angulaire. Ce codeur est, dans ce mode de réalisation, un codeur magnétique présentant une réponse en rampes périodiques proportionnelle croissante ou décroissante. Avec ce codeur magnétique, la position angulaire $\theta$ à un instant donné est mesurée par mesure de l'axe magnétique d'un aimant à magnétisation radiale fixé sur l'actionneur 3

Ici, cet arbre de sortie 30 est relié au codeur 9 de position angulaire de sorte qu'une position X de l'actionneur sur l'arbre de sortie 30 correspond à une unique position angulaire $\theta$ du codeur 9 de position angulaire.

Plus particulièrement, le mouvement de l'arbre de sortie 30 est transmis vers le codeur 9, par exemple par le biais d'une liaison mécanique 32 comportant une réduction comme illustré en figure 2, de sorte qu'une translation et/ou une rotation de l'actionneur 3 sur l'arbre 30 entraîne une rotation du codeur 9.

Ici, l'actionneur 3 est mobile entre une position minimale Xmin correspondant à une unique position angulaire minimale $\theta$min du codeur 9 et une position maximale Xmax correspondant à une unique position angulaire maximale $\theta$max du codeur 9.

De sorte à ce qu'une position X de l'actionneur sur l'arbre de sortie 30 corresponde à une unique position angulaire $\theta$ du codeur 9, l'écart entre la position angulaire maximale $\theta$max et la position angulaire minimale $\theta$min est inférieur à 360 degrés, soit une période.

Selon les modes de réalisation, l'écart entre la position minimale Xmin de l'actionneur 3 et la position maximale Xmax de l'actionneur 3 est compris entre 100mm et 800mm.

Préférentiellement, l'écart entre la position minimale Xmin de l'actionneur 3 et la position maximale Xmax de l'actionneur 3 est compris entre 500mm et 700mm.

Dans ce mode de réalisation, l'écart entre la position minimale Xmin de l'actionneur 3 et la position maximale Xmax de l'actionneur 3 est égal à 600mm.

Afin de connaître le positionnement des actionneurs, une unité de calcul 4 est mise en œuvre et est reliée à chacun de ces actionneurs 3.

Cette unité de calcul 4 est tout d'abord munie de moyens 40 d'obtention de la position angulaire $\theta$ du codeur 9. Elle comprend également des moyens 41 de conversion de la position angulaire $\theta$ en position relative X(t) de l'arbre 3. Elle comprend en outre des moyens 42 d'émission de la position relative X(t) de l'arbre 3.

Cette unité de calcul 4 peut comprendre également un filtre à hystérésis.

Du fait du positionnement aléatoire du codeur 9 par rapport à l'arbre de sortie 30, il est nécessaire, avant l'utilisation du siège, de calibrer les différents actionneurs de façon à ce que le dispositif d'actionnement soit apte à commander le déplacement de chaque actionneur.

De ce fait, le procédé de détermination de la position d'un dispositif d'actionnement 1 comprend un sous procédé 100' préalable de calibrage automatique du dispositif d'actionnement 1 comprenant les étapes suivantes:

- une étape 101 de placement de l'actionneur à une position prédéterminée Xref correspondant à une valeur d'angle attendue $\theta$att du codeur ;
- une étape 102 de mesure d'une valeur d'angle de positionnement initial $\theta$ini du codeur 9 de position angulaire lorsque l'arbre de l'actionneur est dans la position prédéterminée Xref ;
- une étape 103 de comparaison de ladite valeur d'angle de positionnement initial $\theta$ini et de ladite valeur d'angle attendue $\theta$att, et
- une étape 104 de calcul du décalage angulaire $\theta$décal du signal du codeur de position angulaire, avec $\theta$décal = ($\theta$ini - $\theta$att) [MODULO 360°], $\theta$décal étant compris entre 0° et 359°.

En d'autres termes, on attribue une valeur $\theta$att que l'on souhaite attribuer dans le contrôle du mouvement de l'actionneur pour une position de référence d'arbre d'actionneur 30 sur le mouvement du siège d'aéronef.

Pour cette position prédéterminée Xref de référence de l'arbre d'actionneur 30 affectée d'une valeur d'angle attendu $\theta$att, le codeur 9 renvoie une valeur d'angle de positionnement initial $\theta$ini, dans la période de mesure de 360°, d'où la modulation par la fonction MODULO 360°.

On peut alors comparer la valeur de l'angle de positionnement initial θini, c'est-à-dire l'angle mesuré, et la valeur d'angle attendue θatt, et en déduire le décalage θdécal avec la relation :

$$\theta\text{décal} = (\theta\text{ini} - \theta\text{att})\ [\text{MODULO } 360°]$$

Cette étape de calibrage, ou de calage angulaire, permet de déterminer et mémoriser le décalage angulaire aléatoire d'un codeur à un autre entre sa valeur angulaire mesurée et la valeur angulaire attendue pour la position de l'arbre installé dans la course du mouvement à contrôler. Ce décalage étant permanent, son identification et sa mémorisation dans la phase de calibrage permet une correction de mesure permanente dans la phase d'exploitation.

Selon un mode de réalisation préféré de l'invention, on peut prévoir que le dispositif comprenne une mémoire permettant de sauvegarder cette valeur de décalage angulaire θdécal.

Suite à un premier calibrage, qui peut être répété si nécessaire, le procédé de détermination de la position du dispositif d'actionnement 1 peut entrer dans un mode de fonctionnement « normal », ou mode de fonctionnement d'exploitation, et comprend une étape 105 de mesure de la position X(t) de l'actionneur 3 à un instant donné selon la relation suivante :

$$X(t) = \frac{\left[(\theta + \theta\text{décal})[\text{MODULO } 360°]\right]}{K} + Xmin$$

avec Xmin étant la position minimale de l'actionneur, et avec K étant un coefficient de proportion entre la valeur d'angle envoyée par le codeur et la valeur de la position de l'actionneur.

Il est à noter que ce coefficient K peut par exemple être donné par des constructeurs du codeur ou de l'actionneur.

Ensuite, après la mesure de la position X(t) de l'actionneur, le procédé de détermination comprend une étape 106 de détermination d'une position d'au moins un élément 2 à actionner de siège 10 d'aéronef en fonction de la position de l'actionneur à un instant donné X(t).

Selon une variante de l'invention, le procédé peut également comprendre une étape de détermination d'une position angulaire minimale θmin du codeur 9 correspondant à une position minimale Xmin de l'actionneur 3, et d'une position angulaire maximale θmax du codeur 9 correspondant à une position maximale Xmax de l'actionneur 3.

Comme déjà discuté, la position angulaire maximale θmax et la position angulaire minimale θmin présentent un écart absolu inférieur à 360 degrés.

Du fait du positionnement aléatoire du codeur 9 par rapport à l'arbre de sortie 30, et de la période maximale de 360° d'utilisation du codeur 9, une transition de signal de sortie due au passage du codeur de la fin de période d'un tour et du commencement d'un deuxième tour peut apparaître une fois, n'importe où dans la plage d'exploitation angulaire du codeur. De ce fait, dans ce mode de réalisation, si (θmin) > (θmax), le procédé comprend, pour 355°<θ< 365° :

- une étape de détection du sens de rotation du codeur angulaire 9, et
- une étape de désactivation de l'étape 105 de mesure de la position X(t) de l'actionneur à un instant donné pendant une durée prédéterminée.

Ces deux étapes permettent, d'une part, de détecter le sens de rotation du codeur angulaire et donc de savoir si le codeur angulaire s'approche ou s'éloigne d'une valeur indiquant la proximité de la transition de signal, et de l'autre de ne pas prendre de mesures pendant une durée prédéterminée, cette durée prédéterminée permettant de passer la position angulaire correspondant à la transition de signal et donc de ne pas fausser les mesures.

Selon le mode de réalisation illustré, cette étape est réalisée si θmin > θmax et si pour 355°<θ< 365°. Toutefois, selon des variantes, la plage de valeurs peut être adaptée notamment à la sensibilité voulue pour une mise en mouvement des éléments de siège.

En outre, la durée prédéterminée peut par exemple être comprise entre 10 et 20ms. Selon le mode de réalisation illustré, la durée prédéterminée est égale à 15ms.

## Revendications

1. Procédé (100) de détermination de la position d'un dispositif d'actionnement (1) d'au moins un élément (2) à actionner de siège (10) d'aéronef, le dispositif d'actionnement (1) comprenant une unité de calcul (4), un actionneur (3) monté mobile en translation et/ou en rotation sur un arbre de sortie (30) de sorte à actionner l'au moins un élément (2) de siège (10) d'aéronef correspondant, ledit arbre de sortie (30) étant relié à un codeur (9) de position angulaire de sorte qu'une position (X) de l'actionneur sur ledit arbre de sortie (30) correspond à une unique position angulaire (θ) du codeur (9) de position angulaire,

le procédé comprenant un sous procédé (100') préalable de calibrage automatique dudit dispositif d'actionnement (1) comprenant les étapes suivantes:

- une étape (101) de placement de l'actionneur à une position prédéterminée (Xref) correspondant à une valeur d'angle attendue (θatt) du codeur ;
- une étape (102) de mesure d'une valeur d'angle de positionnement initial (θini) du codeur (9) de position angulaire lorsque l'arbre de l'actionneur est dans la position prédéterminée (Xref) ;
- une étape (103) de comparaison de ladite valeur d'angle de positionnement initial (θini) et de ladite valeur d'angle attendue (θatt) ;
- une étape (104) de calcul du décalage angulaire (θdécal) du signal du codeur de position angulaire, avec θdécal = (θini - θatt) [MODULO 360°], θdécal étant compris entre 0° et 359°.

2. Procédé de détermination de la position d'un dispositif d'actionnement (1) selon la revendication 1, **caractérisé en ce qu'**il comprend une étape (105) de mesure de la position (X(t)) de l'actionneur à un instant donné selon la relation suivante :

$$X(t) = \frac{\left[(\theta + \theta\text{décal})[\text{MODULO } 360°]\right]}{K} + Xmin$$

avec Xmin une position minimale de l'actionneur,
avec K un coefficient de proportion entre la valeur d'angle envoyée par le codeur et la valeur de la position de l'actionneur.

3. Procédé de détermination de la position d'un dispositif d'actionnement (1) selon la revendication 2, **caractérisé en ce qu'**il comprend une étape (106) de détermination d'une position d'au moins un élément (2) à actionner de siège (10) d'aéronef en fonction de ladite position de l'actionneur à un instant donné X(t).

4. Procédé de détermination de la position d'un dispositif d'actionnement (1) selon l'une des revendications précédentes, **caractérisé en ce qu'**il comprend une étape de détermination d'une position angulaire minimale (θmin) du codeur (9) correspondant à une position minimale (Xmin) dudit actionneur (3), et d'une position angulaire maximale (θmax) du codeur (9) correspondant à une position maximale (Xmax) dudit actionneur (3), la position angulaire maximale (θmax) et la position angulaire minimale (θmin) présentant un écart absolu inférieur à 360 degrés.

5. Procédé de détermination de la position d'un dispositif d'actionnement (1) selon la revendication précédente, **caractérisé en ce que** si (θmin) > (θmax), le procédé comprend, pour 355°<θ< 365° :

- une étape de détection du sens de rotation dudit codeur angulaire (9) ;
- une étape de désactivation de ladite étape (105) de mesure de la position (X(t)) de l'actionneur à un instant donné pendant une durée prédéterminée.

6. Dispositif d'actionnement (1) d'au moins un élément (2) à actionner de siège (10) d'aéronef, le dispositif d'actionnement (1) comprenant une unité de calcul (4), un actionneur (3) muni d'un arbre de sortie (30) de sorte à actionner l'au moins un élément (2) de siège (10) d'aéronef correspondant, ledit arbre de sortie (30) étant relié à un codeur (9) de position angulaire de sorte qu'une position (X) de l'actionneur sur ledit arbre de sortie (30) correspond à une unique position angulaire (θ) du codeur (9), ledit dispositif étant configuré pour mettre en œuvre un procédé de détermination de la position du dispositif d'actionnement selon l'une des revendications 1 à 5.

7. Dispositif d'actionnement selon la revendication précédente, caractérisé en ce l'actionneur est mobile entre une position minimale (Xmin) correspondant à une unique position angulaire minimale (θmin) du codeur (9) et une position maximale (Xmax) correspondant à une unique position angulaire maximale (θmax) du codeur (9), l'écart entre la position angulaire maximale (θmax) et la position angulaire minimale (θmin) étant inférieur à 360 degrés.

8. Dispositif d'actionnement selon la revendication précédente, caractérisé en ce l'écart entre la position minimale (Xmin) de l'actionneur (3) et la position maximale (Xmax) de l'actionneur (3) est compris entre 100mm et 800mm, préférentiellement entre 500mm et 700mm, encore préférentiellement égal à 600mm.

9. Dispositif d'actionnement selon l'une des revendications 6 à 8, **caractérisé en ce que** le codeur est un codeur magnétique présentant une réponse en rampes périodiques proportionnelle croissante ou décroissante, la position angulaire (θ) à un instant donné étant mesurée par mesure de l'axe magnétique d'un aimant à magnétisation radiale fixé sur l'actionneur (3)

10. Dispositif d'actionnement selon l'une des revendications 6 à 9, **caractérisé en ce que** ladite unité de calcul (4) comprend un filtre à hystérésis.

11. Siège d'aéronef, comprenant au moins un élément (2) de siège (10) mobile, **caractérisé en ce que** le siège est muni d'au moins un dispositif d'actionnement selon l'une des revendications 6 à 10.


**Patentansprüche**

1. Verfahren (100) zum Bestimmen der Position einer Betätigungseinrichtung (1) mindestens eines zu betätigenden Elements (2) eines Flugzeugsitzes (10), wobei die Betätigungseinrichtung (1) eine Recheneinheit (4), einen in Translation und/oder Rotation beweglich auf einer Abtriebswelle (30) montierten Aktuator (3) umfasst, so dass das mindestens eine entsprechende Element (2) eines Flugzeugsitzes (10) betätigt wird, wobei die Abtriebswelle (30) mit einem Winkelpositionsencoder (9) verbunden ist, so dass eine Position (X) des Aktuators auf der Abtriebswelle (30) einer einzigen Winkelposition (θ) des Winkelpositionsencoders (9) entspricht,
wobei das Verfahren ein vorheriges Unterverfahren (100') zur automatischen Kalibrierung der Betätigungseinrichtung (1) umfasst, das die folgenden Schritte umfasst:

- einen Schritt (101) zum Platzieren des Aktuators in eine vorbestimmte Position (Xref), die einem erwarteten Winkelwert (θatt) des Encoders entspricht;
- einen Schritt (102) zum Messen eines Ausgangspositionswinkelwerts (θini) des Winkelpositionsencoders (9), wenn sich die Aktuatorwelle in der vorbestimmten Position (Xref) befindet;
- einen Schritt (103) des Vergleichs des Ausgangspositionswinkelwerts (θini) und des erwarteten Winkelwerts (θatt);
- einen Schritt (104) zur Berechnung der Winkelverschiebung (θVerschiebung) des Winkelpositionsencodersignals, mit θVerschiebung = (θini - θatt) [360°-MODULO], wobei die θVerschiebung zwischen 0° und 359° liegt.

2. Verfahren zur Bestimmung der Position einer Betätigungseinrichtung (1) nach Anspruch 1, **dadurch gekennzeichnet, dass** es einen Schritt (105) zum Messen der Position (X(t)) des Aktuators zu einem bestimmten Zeitpunkt gemäß folgender Beziehung umfasst:

$$X(t) = \frac{[(\theta + \theta \text{Verschiebung})\,[\text{MODULO } 360°]]}{K} + Xmin$$

mit Xmin eine minimale Position des Aktuators,
mit K ein Verhältniskoeffizient zwischen dem vom Encoder gesendeten Winkelwert und dem Wert der Aktuatorposition.

3. Verfahren zur Bestimmung der Position einer Betätigungseinrichtung (1) nach Anspruch 2, **dadurch gekennzeichnet, dass** es einen Schritt (106) zur Bestimmung einer Position von mindestens einem zu betätigenden Element (2) eines Flugzeugsitzes (10) in Abhängigkeit von der Position des Aktuators zu einem bestimmten Zeitpunkt X(t) umfasst.

4. Verfahren zur Bestimmung der Position einer Betätigungseinrichtung (1) nach einem der vorhergehenden Ansprüche, **dadurch gekennzeichnet, dass** es einen Schritt zur Bestimmung einer minimalen Winkelposition (θmin) des Encoders (9) umfasst, die einer minimalen Position (Xmin) des besagten Aktuators (3) entspricht, und einer maximalen Winkelposition (θmax) des Encoders (9), die einer maximalen Position (Xmax) des besagten Aktuators (3) entspricht, die maximale Winkelposition (θmax) und die minimale Winkelposition (θmin) mit einer absoluten Abweichung von weniger als 360 Grad.

5. Verfahren zur Bestimmung der Position einer Betätigungseinrichtung (1) nach dem vorhergehenden Anspruch, **dadurch gekennzeichnet, dass**, wenn (θmin) > (θmax), das Verfahren für 355°<θ< 365° Folgendes umfasst:

- einen Schritt zur Erkennung der Drehrichtung des Winkelencoders (9);
- einen Schritt zur Deaktivierung des Schritts (105) zur Messung der Position (X(t)) des Aktuators zu einem bestimmten Zeitpunkt für eine vorbestimmte Zeit.

6. Betätigungseinrichtung (1) für mindestens ein zu betätigendes Element (2) eines Flugzeugsitzes (10), wobei die Betätigungseinrichtung (1) eine Recheneinheit (4), einen Aktuator (3) mit einer Abtriebswelle (30) umfasst, um das mindestens eine entsprechende Element (2) des Flugzeugsitzes (10) zu betätigen, wobei die Abtriebswelle (30) mit einem Winkelpositionsencoder (9) verbunden ist, sodass eine Position (X) des Aktuators an der Abtriebswelle (30) einer einzigen Winkelposition (θ) des Encoders (9) entspricht, wobei die Vorrichtung so eingerichtet ist, dass sie ein Verfahren zur Bestimmung der Position der Betätigungseinrichtung nach einem der Ansprüche 1 bis 5 umsetzt.

7. Betätigungseinrichtung nach dem vorhergehenden Anspruch, **dadurch gekennzeichnet, dass** der Aktuator zwischen einer Mindestposition (Xmin), die einer einzigen minimalen Winkelposition (θmin) des Encoders (9) entspricht, und einer Maximalposition (Xmax), die einer einzigen maximalen Winkelposition (θmax) des Encoders (9) entspricht, beweglich ist, wobei die Abweichung zwischen der maximalen Winkelposition (θmax) und der minimalen Winkelposition (θmin) weniger als 360 Grad beträgt.

8. Betätigungseinrichtung nach dem vorhergehenden Anspruch, **dadurch gekennzeichnet, dass** der Abstand zwischen der minimalen Position (Xmin) des Aktuators (3) und der maximalen Position (Xmax) des Aktuators (3) zwischen 100 mm und 800 mm, vorzugsweise zwischen 500 mm und 700 mm, noch vorzugsweise gleich 600 mm beträgt.

9. Betätigungseinrichtung nach einem der Ansprüche 6 bis 8, **dadurch gekennzeichnet, dass** der Encoder ein magnetischer Encoder mit einer proportional steigenden oder abnehmenden periodischen Rampenreaktion ist, wobei die Winkelposition (θ) zu einem bestimmten Zeitpunkt durch Messung der Magnetachse eines am Aktuator (3) befestigten Radialmagneten gemessen wird

10. Betätigungseinrichtung nach einem der Ansprüche 6 bis 9, **dadurch gekennzeichnet, dass** die Recheneinheit (4) einen Hysteresefilter umfasst.

11. Flugzeugsitz, umfassend mindestens ein bewegliches Element (2) des Sitzes (10), **dadurch gekennzeichnet, dass** der Sitz mit mindestens einer Betätigungseinrichtung nach einem der Ansprüche 6 bis 10 ausgestattet ist.

**Claims**

1. Method (100) for determining the position of an actuating device (1) of at least one element (2) for actuating an aircraft seat (10), the actuating device (1) comprising a calculating unit (4), an actuator (3) mounted to be movable in translation and/or in rotation on an output shaft (30) so as to actuate the corresponding at least one element (2) of an aircraft seat (10), said output shaft (30) being connected to an angular position encoder (9) so that a position (X) of the actuator on said output shaft (30) corresponds to a single angular position (θ) of the angular position encoder (9), the method comprising a preliminary submethod (100') of automatically calibrating said actuating device (1) comprising the following steps:

   - a step (101) of placing the actuator at a predetermined position (Xref) corresponding to an expected angle value (θatt) of the encoder;
   - a step (102) of measuring an initial positioning angle value (θini) of the angular position encoder (9) when the actuator shaft is in the predetermined position (Xref);
   - a step (103) of comparing said initial positioning angle value (θini) and said expected angle value (θatt);
   - a step (104) of calculating the angular offset (θdecal) of the angular position encoder signal, with θdécal = (θini - θatt) [MODULO 360°], θdecal being between 0° and 359°.

2. Method for determining the position of an actuating device (1) according to claim 1, further comprising a step (105) of measuring the position (X(t)) of the actuator at a given moment according to the following relationship:

$$X(t) = \frac{[(\theta + \theta\text{décal})[\text{MODULO } 360°]]}{K} + Xmin$$

with Xmin a minimum position of the actuator,
with K a proportion coefficient between the angle value sent by the encoder and the value of the actuator position.

3. Method for determining the position of an actuating device (1) according to claim 2, further comprising a step (106) of determining a position of at least one element (2) to be actuated of an aircraft seat (10) as a function of said position of the actuator at a given moment X(t).

4. Method for determining the position of an actuating device (1) according to any of previous claims, further comprising a step of determining a minimum angular position ($\theta$min) of the encoder (9) corresponding to a minimum position (Xmin) of said actuator (3), and a maximum angular position ($\theta$max) of the encoder (9) corresponding to a maximum position (Xmax) of said actuator (3), the maximum angular position ($\theta$max) and the minimum angular position ($\theta$min) having an absolute variance of less than 360 degrees.

5. Method for determining the position of an actuating device (1) according to previous claim, wherein if ($\theta$min) > ($\theta$max), the method comprises, for $355° < \theta < 365°$:

   - a step of detecting the direction of rotation of said angular encoder (9);
   - a step of deactivating said step (105) of measuring the position (X(t)) of the actuator at a given moment for a predetermined period.

6. Actuating device (1) of at least one element (2) for actuating an aircraft seat (10), the actuating device (1) comprising a calculating unit (4), an actuator (3) provided with an output shaft (30) so as the actuate the corresponding at least one element (2) of an aircraft seat (10), said output shaft (30) being connected to an angular position encoder (9) so that a position (X) of the actuator on said output shaft (30) corresponds to a single angular position ($\theta$) of the encoder (9), said device being configured to implement a method for determining the position of the actuating device according to any of claims 1 to 5.

7. Actuating device according to previous claim, wherein the actuator can be moved between a minimum position (Xmin) corresponding to a single minimum angular position ($\theta$min) of the encoder (9) and a maximum position (Xmax) corresponding to a single maximum angular position ($\theta$max) of the encoder (9), the deviation between the maximum angular position ($\theta$max) and the minimum angular position ($\theta$min) being less than 360 degrees.

8. Actuating device according to previous claim, wherein the deviation between the minimum position (Xmin) of the actuator (3) and the maximum position (Xmax) of the actuator (3) is between 100mm and 800mm, preferably between 500mm and 700mm, still more preferably equal to 600mm.

9. Actuating device according to any of claims 6 to 8, wherein the encoder is a magnetic encoder having a periodical proportional increasing or decreasing ramp response, the angular position ($\theta$) at a given moment being measured by measuring the magnetic axis of a radially magnetised magnet attached to the actuator (3).

10. Actuating device according to any of claims 6 to 9, wherein said calculating unit (4) comprises a hysteresis filter.

11. Aircraft seat, comprising at least one element (2) of a movable seat mobile (10), wherein the seat is provided with at least one actuating device according to one of claims 6 to 10.

[Fig. 1]

Fig. 1

[Fig. 2]

Fig. 2

$X = f(V)$

[Fig. 3]

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013148111 A1
- US 2015375865 A1
- WO 2014009356 A1